# EUROPÄISCHE PATENTSCHRIFT

(11) **EP 1 500 992 B1**
(45) Veröffentlichungstag und Bekanntmachung des Hinweises auf die Patenterteilung: **09.11.2005**
(21) Anmeldenummer: 03016415.6
(22) Anmeldetag: 21.07.2003
(51) Int. Cl.: G05B 19/042

(54) **Anordnung zur Bedienung von Feldgeräten einer betriebstechnischen Anlage eines Gebäudes**
Apparatus for operating field devices of a building automation system
Dispositif de commande d'appareils de terrain pour une installation technique dans un système d'automatisation de bâtiments

(43) Veröffentlichungstag der Anmeldung: 26.01.2005
(73) Patentinhaber: Siemens Schweiz AG, 8047 Zürich (CH)
(72) Erfinder: Stoll, Walter, 6417 Sattel (CH)
(74) Vertreter: Weise, Wolfgang

(56) Entgegenhaltungen:
- EP-A- 1 211 582
- US-A- 4 872 213
- US-A- 5 032 742

## Beschreibung

Die Erfindung bezieht sich auf eine Anordnung gemäss dem Oberbegriff des Anspruchs 1.

Solche Anordnungen eignen sich beispielhaft zur Eingabe von Signalen von Feldgeräten in einer Einrichtung zur Überwachung, Steuerung und Regelung einer betriebstechnischen Anlage eines Gebäudes und zur Ausgabe von Signalen an Feldgeräte der genannten Einrichtung.

Die betriebstechnische Anlage ist beispielhaft eine Heizungs-, Lüftungs- und Klimaanlage, mit Zutritts- und Feuerüberwachungseinrichtungen oder allgemein eine Gebäudeautomatisationsanlage oder ein Gebäudeleitsystem. Durch die betriebstechnische Anlage werden insbesondere auch Raumklimagrössen wie Raumtemperatur, Luftfeuchtigkeit und Luftqualität beeinflusst. In der betriebstechnische Anlage ist eine Vielzahl sogenannter Feldgeräte wie Sensoren und Stellglieder durch elektrische Signale zu bedienen, wobei - je nach Art eines Feldgeräts - elektrische Signale an das Feldgerät ausgegeben werden und/oder elektrische Signale vom Feldgerät eingegeben werden.

Aus US 4 872 213 ist ein Schnittstellenbaustein der im Oberbegriff des Anspruchs 1 genannten Art bekannt. Bei der Verwendung des bekannten Schnittstellenbausteins in einer Anlage kann der Schnittstellenbaustein möglicherweise zerstört werden, wenn Anschlussklemmen falsch verdrahtet werden.

Der Erfindung liegt die Aufgabe zugrunde, eine Anordnung mit einem universell für Stellglieder oder Sensoren konfigurierbaren Schnittstellenbaustein anzugeben, in der der Schnittstellenbaustein auch dann nicht zerstört wird, wenn Anschlussklemmen falsch verdrahtet werden.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
Fig. 1 ein Blockschaltbild eines Teils einer betriebstechnischen Anlage mit Feldgeräten,
Fig. 2 einen universellen Schnittstellenbaustein für Feldgeräte, mit einer externen Beschaltung gemäss der vorliegenden Erfindung,
Fig. 3 die externe Beschaltung sowie wichtige Funktionsblöcke des Schnittstellenbausteins zur Bedienung eines passiven Sensors einer gewissen Klasse,
Fig. 4 die externe Beschaltung sowie wichtige Funktionsblöcke des Schnittstellenbausteins zur Bedienung eines passiven Sensors einer weiteren Klasse,
Fig. 5 die externe Beschaltung sowie wichtige Funktionsblöcke des Schnittstellenbausteins zur Bedienung eines aktiven Sensors einer gewissen Klasse,
Fig. 6 die externe Beschaltung sowie wichtige Funktionsblöcke des Schnittstellenbausteins zur Bedienung eines aktiven Sensors einer weiteren Klasse,
Fig. 7 die externe Beschaltung sowie wichtige Funktionsblöcke des Schnittstellenbausteins zur Erfassung des Zustands eines Schalters,
Fig. 8 die externe Beschaltung sowie wichtige Funktionsblöcke des Schnittstellenbausteins zur Bedienung eines spannungsgesteuerten Stellglieds,
Fig. 9 die externe Beschaltung sowie wichtige Funktionsblöcke des Schnittstellenbausteins zur Bedienung eines stromgesteuerten Stellglieds,

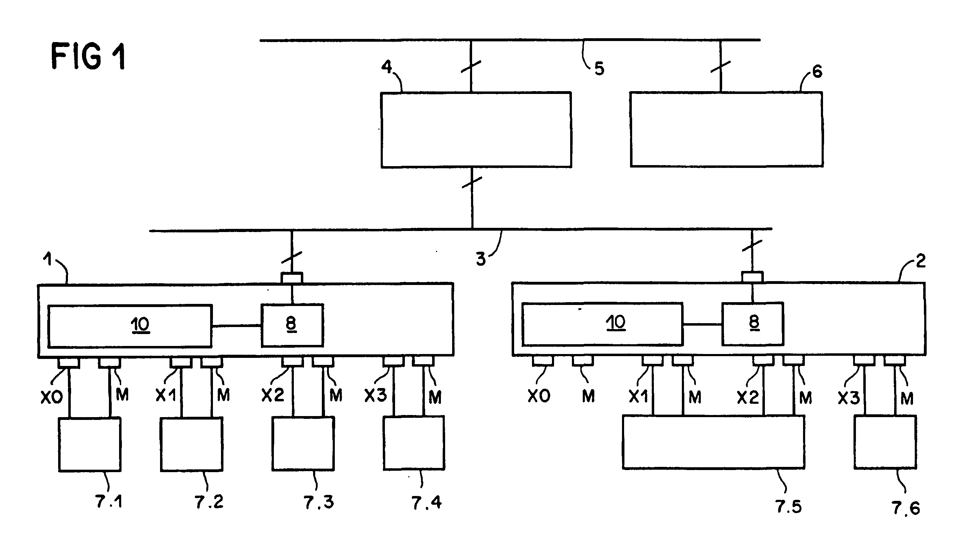

In der Fig. 1 bedeutet 1 ein erstes und 2 ein zweites universelles Ein-/Ausgabemodul. Die beiden Ein-/Ausgabemodule 1 und 2 sind beispielhaft über ein Bussystem 3 mit einem Steuer- und Regelgerät 4 verbunden. Das Steuer- und Regelgerät 4 ist typischerweise über ein weiteres Bussystem 5 mit einem übergeordneten Modul 6, verbunden.

Das universelle Ein-/Ausgabemodul 1 oder auch 2 dient der Bedienung von Feldgeräten, wobei ein Feldgerät allgemein ein Sensor zur Erfassung einer Prozessgrösse oder ein Stellantrieb zur Beeinflussung einer Prozessgrösse ist.

Das Ein-/Ausgabemodul 1 oder auch 2 weist mehrere Klemmen X0, X1, X2 und X3 zum Anschliessen von Feldgeräten auf. Grundsätzlich ist die Anzahl der anschliessbaren Feldgeräte pro Ein-/Ausgabemodul 1 oder auch 2 in weiten Grenzen wählbar und auf zulässige Modulkosten, Platzbedarf und auf den zu erwartenden Datenstrom pro Zeiteinheit abzustimmen. Für Gebäudeautomatisationsanlagen werden mit Vorteil acht oder sechzehn Anschlussstellen pro Ein-/Ausgabemodul 1, 2 verwirklicht.

Eine Anschlussstelle weist eine Klemme X0, X1, X2 oder X3 und vorteilhafterweise je eine weitere Klemme M für den Signalbezugspunkt auf. Die Klemmen M für den Signalbezugspunkt sind vorteilhafterweise innerhalb des Ein-/Ausgabemoduls 1 oder 2 miteinander verbunden.

Grundsätzlich wäre es auch möglich, für das Ein-/Ausgabemodul 1 oder 2 nur eine einzige Mehrfach-Klemme für den Signalbezugspunkt aller Feldgeräte anzuordnen.

Die Klemmen X0, X1, X2 und X3 sind grundsätzlich gleichartig aufgebaut und beschaltet und universal als Eingabeport und als Ausgabeport einsetzbar, also für bidirektionalen Signalfluss und zwar sowohl für analoge Signale als auch für digitale Signale. Die universelle Klemme X0, X1, X2 oder X3 ist damit grundsätzlich für eine Vielzahl von Feldgerätetypen einsetzbar und zwar für Sensoren oder Aktuatoren, also für Feldgeräte mit Analog-Eingabe, Analog-Ausgabe, Digital-Eingabe oder Digital-Ausgabe. Bei Bedarf ist ein Feldgerät 7 mit mehreren Klemmen X0, X1, X2 oder X3 verbunden, nämlich beispielsweise dann, wenn das Feldgerät 7 ein Stellglied mit Positionsrückmeldung ist, wobei dann beispielsweise ein Stellsignal an einer Klemme ausgegeben und gleichzeitig an einer weiteren Klemme ein Zustand oder die aktuelle Position des Stellglieds eingelesen wird.

Die universelle Klemme X0, X1, X2, X3 wie auch die weitere Klemme M ist vorteilhafterweise als Federklemme verwirklicht. Es versteht sich von selbst, dass die Klemme X0, X1, X2, X3 oder M bei Bedarf grundsätzlich auch als Schraubklemme oder beispielsweise als Stecker oder Steckerteil verwirklicht werden kann.

Die Ein-/Ausgabemodule 1 und 2 weisen wenigstens je einen Mikrocomputer 8 und je einen mit dem Mikrocomputer 8 verbundenen Schnittstellenbaustein 10 auf, durch welche die universellen Klemme X0, X1, X2 und X3 für eine gewisse Aufgabe konfigurierbar und entsprechend bedienbar sind. Mit Vorteil ist das Ein-/Ausgabemodul 1 bzw. 2 für eine Datenkommunikation mit dem Steuer- und Regelgerät 4 über den Mikrocomputer 8 mit dem Bussystem 3 verbunden. In einer Variante des Ein-/Ausgabemoduls 1 bzw. 2 ist der Mikrocomputer 8 im Schnittstellenbaustein 10 implementiert. Der Schnittstellenbaustein 10 weist erfindungsgemäss eine externe Beschaltung auf, die vorteilhafterweise im entsprechenden Ein-/Ausgabemodul 1 bzw. 2 vorzugsweise auf einer Leiterplatte angeordnet ist.

Um grosse Stückzahlen kostengünstig zu fertigen und ausserdem eine hohe Zuverlässigkeit und Betriebssicherheit zu erreichen, wird der Schnittstellenbaustein 10 vorteilhafterweise als sogenannter Application-Specific Integrated Circuit (ASIC) verwirklicht.

Beispielhaft an universelle Klemmen angeschlossen sind: ein passiver Sensor 7.1, ein aktiver Sensor 7.2, ein potentialfreier Schalter 7.3, ein spannungsgesteuertes Stellglied 7.4, ein einen Positionsmelder aufweisendes stromgesteuertes Stellglied 7.5 und ein weiteres Feldgerät 7.6.

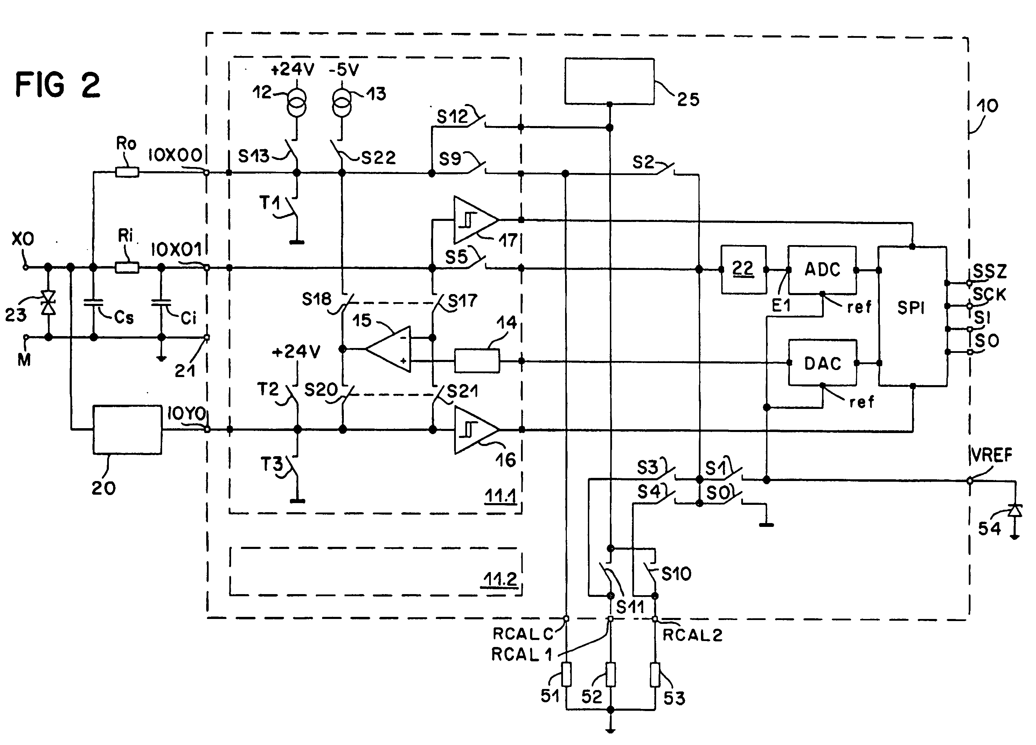

In der Fig. 2 ist ein Blockschaltbild des Schnittstellenbausteins 10 sowie eine vorteilhafte externe Beschaltung des Schnittstellenbausteins 10 dargestellt. Zwecks Übersichtlichkeit sind nur diejenigen Funktionsblöcke des Schnittstellenbausteins 10 dargestellt, welche zum Verständnis der Erfindung beitragen.

Der Schnittstellenbaustein 10 weist mehrere - typischerweise acht - identisch aufgebaute Kanäle auf, von denen einfachheitshalber lediglich ein erster Kanal 11.1 gestrichelt eingerahmt detailliert dargestellt ist. Zusätzlich ist ein zweiter Kanal 11.2 nur durch einen weiteren gestrichelten Rahmen dargestellt.

Obwohl der Schnittstellenbaustein 10 also mehrere Kanäle aufweist, wird im Folgenden die Funktionsweise eines derartigen Kanals einfachheitshalber - und stellvertretend für die weiteren Kanäle des Schnittstellenbausteins 10 - nur an Kanal 11.1 beschrieben.

Der Kanal 11.1 weist mit Vorteil eine erste Stromquelle 12, eine zweite Stromquelle 13, ein sogenanntes Sample-And-Hold-Glied 14, einen eingangsseitig mit dem Sample-And-Hold-Glied 14 verbundener Ausgangsverstärker 15, einen ersten Komparator 16, einen zweiten Komparator 17 und ein aus mehreren Schaltern S und T bestehendes Teil-Schaltnetz auf.

Pro Kanal 11.1 bzw. 11.2 weist der Schnittstellenbaustein 10 wenigstens je einen mit einem ersten ohmschen Widerstand Ri verbundenen ersten Anschlusspunkt IOX01 und einen zweiten mit einem zweiten ohmschen Widerstand Ro verbundenen Anschlusspunkt IOX00 auf.

In einer vorteilhaften Variante ist ausserdem pro Kanal 11.1 bzw. 11.2 noch je ein Spannungs-Strom-Konverter 20 ausserhalb des Schnittstellenbausteins 10 angeordnet. Der Spannungs-Strom-Konverter 20 ist eingangsseitig mit einem dritten Anschlusspunkt IOY0 des entsprechenden Kanals 11.1 und ausgangsseitig mit der ersten dem entsprechenden Kanal 11.1 zugeordneten Klemme X0 verbunden.

Ausserdem weist der Schnittstellenbaustein 10 wenigstens einen vierten Anschlusspunkt 21 für den Signalbezugspunkt auf. Der vierte Anschlusspunkt 21 ist mit der Klemme M verbunden.

Die beiden ohmschen Widerstände Ri und Ro und auch der Spannungs-Strom-Konverter 20 sind vorteilhafterweise nicht im Schnittstellenbaustein 10 integriert, sondern ausserhalb des Schnittstellenbausteins 10 angeordnet. Die dem Kanal 11.1 zugeordnete Klemme X0 ist über den ersten ohmschen Widerstand Ri mit dem ersten Anschlusspunkt IOX01 und über den zweiten ohmschen Widerstand Ro mit dem zweiten Anschlusspunkt IOX00 des Kanals 11.1 verbunden.

Der erste Anschlusspunkt IOX01 ist über steuerbare Schalter S des Schaltnetzes auf den Eingang E1 eines Analog-Digital-Wandlers ADC geführt, wobei dem Analog-Digital-Wandlers ADC bei Bedarf eine mit Vorteil programmgesteuerte Skaliereinrichtung 22 vorgeschaltet ist.

Der zweite Anschlusspunkt IOX00 ist über steuerbare Schalter S des Schaltnetzes mit einer Stromquelle des Schnittstellenbausteins 10 verbindbar.

Mit Vorteil ist ein Halbleiter-Überspannungsschutz 23 zwischen die Klemme X0 und die für den Signalbezugspunkt vorgesehene Klemme M geschaltet, wobei der Halbleiter-Überspannungsschutz 23 vorteilhafterweise nicht im Schnittstellenbaustein 10 integriert und auf unzulässig hohe Spannungen bzw. Störspannungsspitzen abgestimmt ist.

Bei Bedarf ist auch ein Kondensator Cs zwischen die Klemme X0 und die für den Signalbezugspunkt vorgesehene Klemme M geschaltet, wobei der Kondensator Cs vorteilhafterweise nicht im Schnittstellenbaustein 10 integriert ist. Im weiteren ist bei Bedarf ein weiterer Kondensator Ci zwischen den ersten Anschlusspunkt IOX01 und die für den Signalbezugspunkt vorgesehene Klemme M geschaltet, wobei auch der Kondensator Ci vorteilhafterweise nicht im Schnittstellenbaustein 10 integriert ist.

Ein aus zahlreichen vorteilhafterweise vom Mikrocomputer 8 über entsprechende Befehle steuerbaren Schaltern S und T aufgebautes Schaltnetz des Schnittstellenbausteins 10 umfasst einerseits die den einzelnen Kanälen 11.1 bzw. 11.2 zugeordneten Teil-Schaltnetze und ein weiteres Teil-Schaltnetz, welches der Bedienung aller Kanäle 11 gemeinsam dient.

Zur vorteilhafterweise gemeinsamen Bedienung aller Kanäle 11 sind im Schnittstellenbaustein 10 ausser dem Analog-Digital-Wandler ADC weiter ein Digital-Analog-Wandler DAC und eine programmierbare Stromquelle 25 angeordnet. Die Kanäle 11 werden entsprechend im Multiplexverfahren bedient und durch das Schaltnetz situationsgerecht an den Analog-Digital-Wandler ADC, den Digital-Analog-Wandler DAC oder die programmierbare Stromquelle 25 angeschlossen.

Zur digitalen Datenkommunikation zwischen dem Schnittstellenbaustein 10 und dem Mikroprozessor 8 (Fig. 1), weist der Schnittstellenbaustein 10 beispielhaft ein standardisiertes Serial-Peripheral-Interface SPI auf, durch welches auch die Anzahl der notwendigen Anschlusspunkte des Schnittstellenbausteins 10 möglichst gering gehalten werden kann. Der Digital-Analog-Wandler DAC ist eingangsseitig und der Analog-Digital-Wandler ADC ausgangsseitig mit dem SPI verbunden.

Die oben beschriebene und in Fig. 2 dargestellte vorteilhafte Eingangsbeschaltung in der die erste Klemme X0 einerseits über den ersten ohmschen Widerstand Ri auf den ersten Anschlusspunkt IOX01 und die erste Klemme X0 andrerseits über den zweiten ohmschen Widerstand Ro auf den zweiten Anschlusspunkt IOX00 geführt ist, erlaubt bei entsprechender Dimensionierung eine sichere und hochgenaue Bedienung unterschiedlichster Feldgeräte. Insbesondere ist damit ein grosser Teil der in der Gebäudeleittechnik eingesetzten Feldgeräte bedienbar.

Zur Kalibrierung von Signalen an der ersten Klemme X0 sind ohmsche Kalibrierwiderstände vorgesehen, welche über gesteuerte Schalter S des Schaltnetzes eingesetzt werden und welche vorteilhafterweise ausserhalb des Schnittstellenbausteins 10 im Ein-/Ausgabemodul 1 oder 2 angeordnet sind.

In einem vorteilhaften Ausführungsbeispiel des Schnittstellenbausteins 10 weist der Schnittstellenbaustein 10 einen vierten Anschlusspunkt RCALC, einen fünften Anschlusspunkt RCAL1, einen sechsten Anschlusspunkt RCAL2 und einen siebten Anschlusspunkt VREF auf, wobei der vierte Anschlusspunkt RCALC mit einem Messwiderstand 51, der fünfte Anschlusspunkt RCAL1 mit einem ersten Kalibrierwiderstand 52, der sechste Anschlusspunkt RCAL2 mit einem zweiten Kalibrierwiderstand 53 und einen siebten Anschlusspunkt VREF mit einem Spannungs-Referenzelement 54 verbunden ist.

Der siebte Anschlusspunkt VREF ist mit einem Referenzeingang ref des Analog-Digital-Wandlers ADC, mit einem Referenzeingang ref des Digital-Analog-Wandlers DAC und dem Schaltnetz des Schnittstellenbausteins 10 verbunden.

Eine Kalibrierung, Linearisierung, und Skalierung eines Analog-Signals wird im wesentlichen von dem mit dem Schnittstellenbaustein 10 verbundenen Mikrocomputer 8 über das Schaltnetz des Schnittstellenbausteins 10 gesteuert, wobei der Mikrocomputer 8 auch erforderliche Berechnungen durchführt. Mit Vorteil wird die Charakteristik eines Feldgeräts - beispielsweise eine Nicht-Linearität - mit Hilfe des Mikrocomputers 8 ausgeglichen. Selbstverständlich ist der Mikrocomputer 8 grundsätzlich auch durch eine Anordnung mit einem Mikroprozessor zusammen mit Speicher- und Kommunikationsbausteinen implementierbar. Grundsätzlich könnten der Mikrocomputer 8 und der Schnittstellenbaustein 10 auch in einer einzigen Baugruppe verwirklicht werden. Bei Bedarf verfügt der Schnittstellenbaustein 10 über eine in der Zeichnung nicht dargestellte Ablaufsteuerung zur Interpretation gewisser vom Mikrocomputer 8 ausgelagerter Anweisungen an den Schnittstellenbaustein 10.

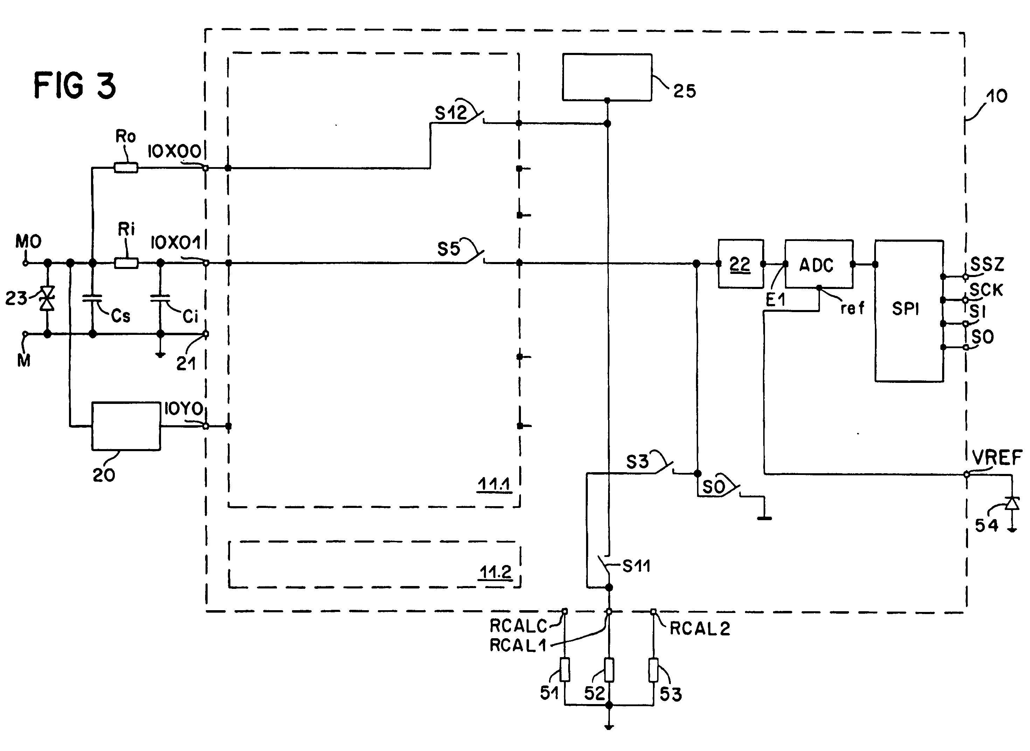

Fig. 3 zeigt wichtige Schalter S12, S6, S11, S3 und S0 des Schaltnetzes, falls zwischen der ersten Klemme X0 und der weiteren Klemme M ein passiver Sensor mit relativ linearer Charakteristik angeschlossen ist. Der passive Sensor ist beispielhaft ein Temperaturfühler aus Nickel oder Platin. Eine Temperaturmessung erfolgt indirekt über den Widerstandswert des Temperaturfühlers, aus dem unter Berücksichtigung der Charakteristik des Temperaturfühlers die Temperatur berechnet wird. Vorteilhafterweise wird der Widerstandswert des Temperaturfühlers durch den Vergleich einer über dem Temperaturfühler liegenden Spannung und einer über dem ersten Kalibrierwiderstand 52 liegenden Spannung ermittelt, wobei der Temperaturfühler und der erste Kalibrierwiderstand 52 einseitig am Signalbezugspunkt liegen und vom gleich grossen Strömen durchflossen werden.

Durch Schliessen eines ersten Schalters S11 wird die programmierbare Stromquelle 25 an den ersten Kalibrierwiderstand 52 angeschlossen, wobei durch Schliessen eines zweiten Schalters S3 die über dem ersten Kalibrierwiderstand 52 liegende Spannung via die Skaliereinrichtung 22 an den Eingang E1 des Analog-Digital-Wandlers ADC zur Erfassung geleitet wird.

Durch Schliessen eines dritten Schalter S12 wird die programmierbare Stromquelle 25 via den zweiten ohmschen Widerstand Ro an den Temperaturfühler angeschlossen, wobei durch Schliessen eines vierten Schalters S5 die über dem Temperaturfühler liegende Spannung via die Skaliereinrichtung 22 an den Eingang E1 des Analog-Digital-Wandlers ADC zur Erfassung geleitet wird.

Durch Schliessen eines fünften Schalters S0 wird der Eingang E1 des Analog-Digital-Wandlers ADC an den Signalbezugspunkt gelegt, wodurch ein Nullpunkt Abgleich ermöglicht wird.

Weist der passive Sensor einen Nennwert von 1000 Ohm auf, sind mit der vorgeschlagenen Schaltung gute Resultate erzielbar, wenn der Nennwert des ersten Kalibrierwiderstands 52 etwa bei 2,4 kOhm liegt.

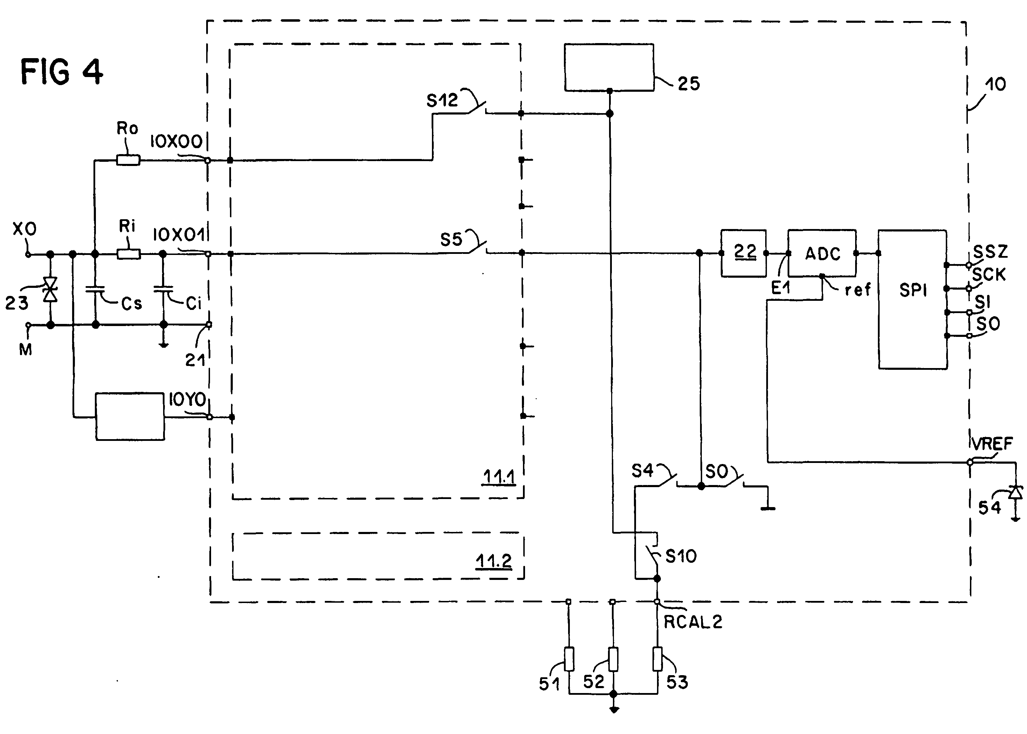

Fig. 4 zeigt wichtige Schalter S12, S5, S10, S4 und S0 des Schaltnetzes, falls zwischen der ersten Klemme X0 und der weiteren Klemme M ein passiver Sensor mit stark nicht linearer Charakteristik angeschlossen ist. Der passive Sensor ist beispielhaft ein sogenannter NTC-Sensor, also ein Halbleiter-Temperaturfühler mit negativem Temperaturkoeffizient. Eine Temperaturmessung erfolgt indirekt über den Widerstandswert des Temperaturfühlers, aus dem unter Berücksichtigung der bekannten Charakteristik des Temperaturfühlers die Temperatur berechnet wird. Vorteilhafterweise wird die Charakteristik des parallel zum zweiten Kalibrierwiderstand 53 geschalteten Temperaturfühlers erfasst und festgehalten. Der Widerstandswert des Temperaturfühlers wird ermittelt durch den Vergleich einer über dem zweiten Kalibrierwiderstand 53 liegenden Spannung und einer über der Parallelschaltung des Temperaturfühlers und des zweiten Kalibrierwiderstandes 53 liegenden Spannung, wobei der Temperaturfühler und der zweite Kalibrierwiderstand 53 einseitig am Signalbezugspunkt liegen und für die Messungen die gleiche Stromquelle benutzt wird.

Durch Schliessen eines sechsten Schalters S10 wird die programmierbare Stromquelle 25 an den zweiten Kalibrierwiderstand 53 angeschlossen, wobei durch Schliessen eines siebten Schalters S4 die über dem zweiten Kalibrierwiderstand 53 liegende Spannung via die Skaliereinrichtung 22 an den Eingang E1 des Analog-Digital-Wandlers ADC zur Erfassung geleitet wird.

Durch Schliessen des dritten Schalter S12 bei geschlossenem sechsten Schalter S10 wird die programmierbare Stromquelle 25 an den zweiten Kalibrierwiderstand 53 und via den zweiten ohmschen Widerstand Ro an den Temperaturfühler angeschlossen, wobei durch Schliessen des vierten Schalters S5 bei offenem siebten Schalter S4 die über dem Temperaturfühler liegende Spannung via die Skaliereinrichtung 22 an den Eingang E1 des Analog-Digital-Wandlers ADC zur Erfassung geleitet wird.

Durch Schliessen des fünften Schalters S0 wird der Eingang E1 des Analog-Digital-Wandlers ADC an den Signalbezugspunkt gelegt, wodurch ein Nullpunkt Abgleich ermöglicht wird.

Weist der passive Sensor bei 25°C einen Widerstandswert zwischen 10 kOhm und 100 kOhm auf, sind mit der vorgeschlagenen Schaltung gute Resultate erzielbar, wenn der Nennwert des zweiten Kalibrierwiderstands 53 etwa bei 33 kOhm liegt.

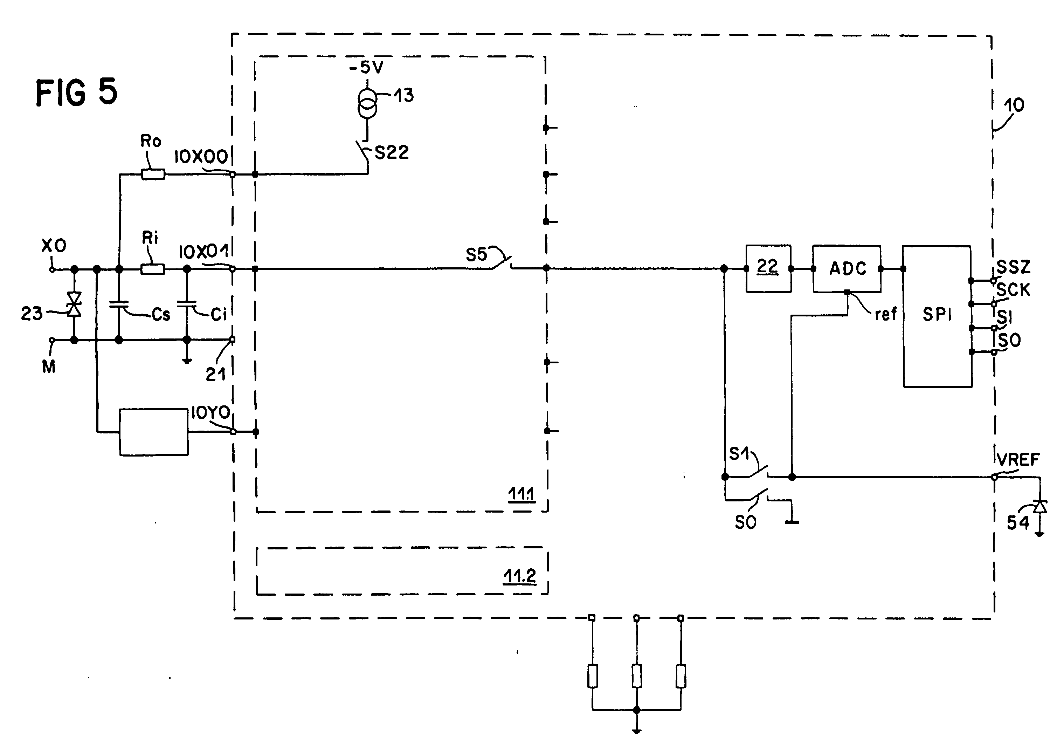

Fig. 5 zeigt wichtige Schalter S5, S22, S1 und S0 des Schaltnetzes, falls zwischen der ersten Klemme X0 und der weiteren Klemme M ein aktiver - eine elektrische Spannung liefernder - Sensor angeschlossen ist. Der aktive Sensor ist beispielhaft ein Spannungsgeber, der ein Signal im Bereich zwischen 0 V und 10 V liefert.

Für eine Vergleichs- oder Kalibriermessung wird durch Schliessen eines achten Schalters S1 das Spannungs-Referenzelement 54 an den Eingang E1 des Analog-Digital-Wandlers ADC gelegt. Ein Nullpunktabgleich wird, bei offenem vierten Schalter S5 und bei offenem achten Schalter S1, durch Schliessen des fünften Schalters S0 ermöglicht.

Durch Schliessen des vierten Schalters S5 wird ein Signal des aktiven Sensors über die Skaliereinrichtung 22 an den Eingang E1 des Analog-Digital-Wandlers ADC gelegt.

Durch Schliessen eines neunten Schalters S22 wird die zweite Stromquelle 13 mit dem zweiten Anschlusspunkt IOX00 verbunden. Die zweite Stromquelle 13 ist derart gepolt und ausgelegt, dass beispielsweise bei fehlendem Sensor die Spannung am ersten Anschlusspunkt IOX01 unter null Volt sinkt, so dass ein einfacher Verdrahtungstest ermöglicht wird.

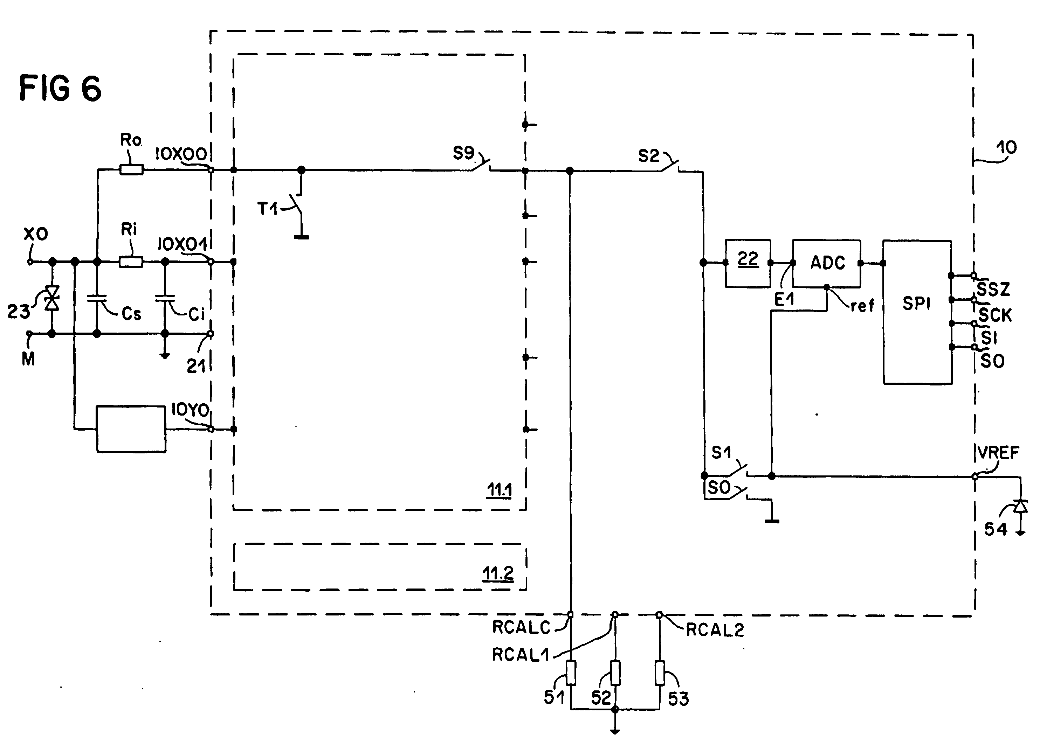

Fig. 6 zeigt wichtige Schalter T1, S9, S2, S1 und S0 des Schaltnetzes, falls das an der ersten Klemme X0 angeschlossene Feldgerät ein aktiver - einen elektrischen Strom liefernder - Sensor ist. Der aktive Sensor liefert beispielhaft einen Strom im Bereich von 4 mA bis 20 mA.

Der zweite Anschlusspunkt IOX00 ist über einen zehnten Schalter T1 mit dem Signalbezugspunkt und über einen elften Schalter S 9 mit dem vierten Anschlusspunkt RCALC und einem zwölften Schalter S2 verbindbar, wobei der zwölfte Schalter S2 über die Skaliereinrichtung 22 mit dem Eingang E1 des Analog-Digital-Wandlers ADC verbunden ist.

Der vom angeschlossenen Feldgerät gelieferte Strom wird durch Erfassung eines Spannungsabfalls über dem mit dem vierten Anschlusspunkt RCALC verbundenen Messwiderstand 51 ermittelt. Durch Schliessen des elften Schalters S9 und des zwölften Schalters S2 wird die am Messwiderstand 51 abfallende Spannung vom ADC erfasst. Für eine Vergleichs- oder Kalibriermessung wird durch Schliessen des achten Schalters S1 das Spannungs-Referenzelement 54 an den Eingang E1 des Analog-Digital-Wandlers ADC gelegt. Ein Nullpunktabgleich wird, bei offenem zwölften Schalter S2 und bei offenem achten Schalter S1, durch Schliessen des fünften Schalters S0 ermöglicht.

Ausserhalb eines Messzyklus ist der Ausgang des angeschlossenen Feldgerätes bei Bedarf über den zehnten Schalter T1 über den zweiten ohmschen Widerstand Ro auf den Signalbezugspunkt schaltbar, so dass der Ausgang des Feldgeräts nie offen bleibt.

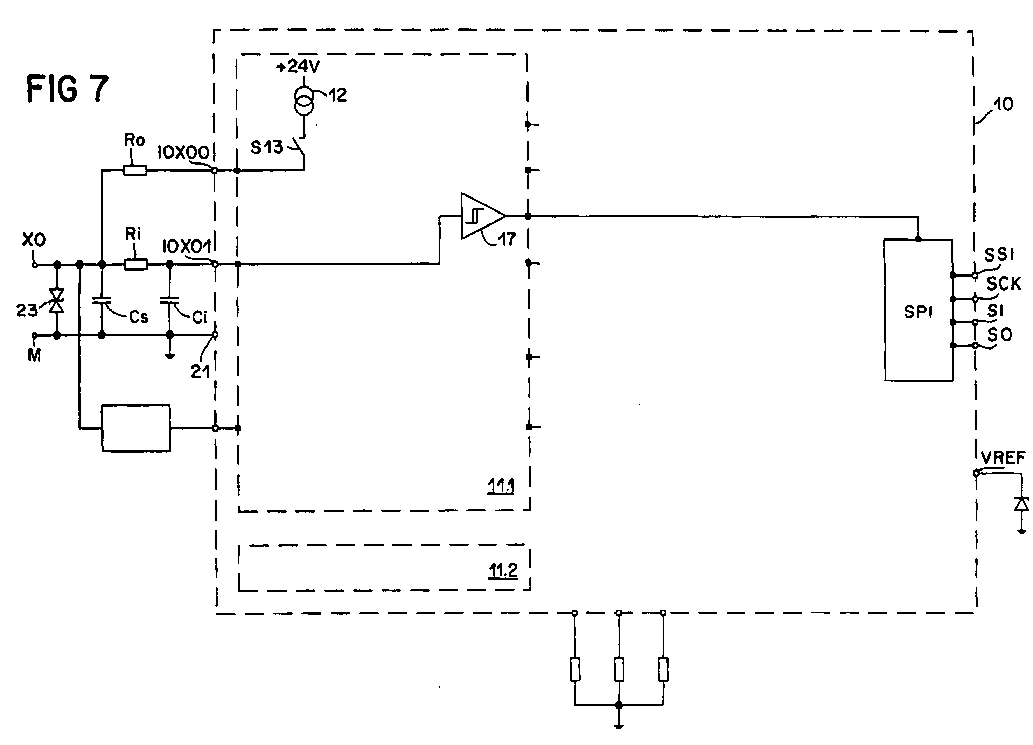

Fig. 7 zeigt ein Schema zur Erfassung des Zustands eines zwischen der ersten Klemme X0 und der weiteren Klemme M angeschlossenen mechanischen oder elektronischen Schalters. Die erste Stromquelle 12 ist über einen dreizehnten Schalter S13 des Schaltnetzes mit dem zweiten Anschlusspunkt IOX00 verbunden. Der zweite Komparator 17 ist eingangsseitig mit dem ersten Anschlusspunkt IOX00 und ausgangsseitig mit dem Serial-Peripheral-Interface SPI verbunden. Wenn die erste Stromquelle 12 an den ersten Anschlusspunkt IOX00 angeschlossen ist, ergibt sich durch den ohmschen Widerstand Ro einerseits im geschlossenen Zustand des Schalters eingangsseitig ein tiefes Spannungspotential und andrerseits bei offenem Zustand des Schalters ein hohes Spannungspotential, welches vom zweiten Komparator 17 eindeutig erfasst wird und als binäres Signal dem Serial-Peripheral-Interface SPI übertragen wird.

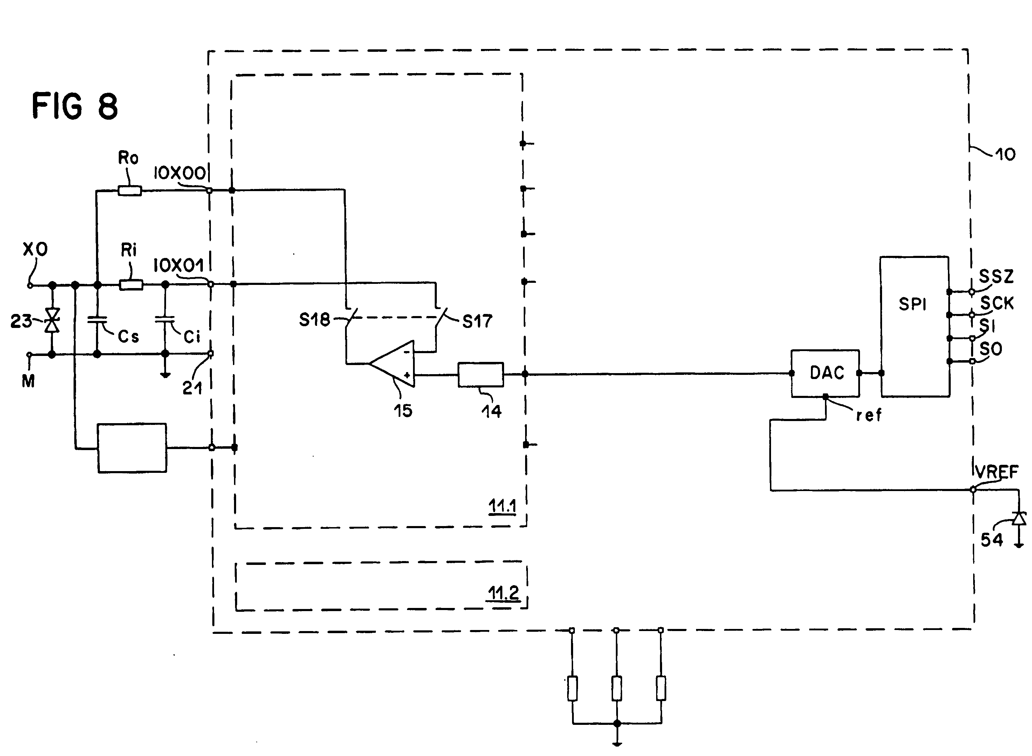

Das in der Fig. 8 zwischen der ersten Klemme X0 und der weiteren Klemme M angeschlossene Feldgerät ist ein spannungsgesteuertes Stellglied, welches beispielhaft in einem Bereich von 0 V bis 10 V anzusteuern ist. Der Digital-Analog-Wandler DAC ist ausgangsseitig mit dem Sample-And-Hold-Glied 14 verbunden. Das Sample-And-Hold-Glied 14 ist auf den nicht invertierenden Eingang eines durch einen Operationsverstärker implementierten Ausgangsverstärker 15 geführt, der ausgangsseitig über einen vierzehnten Schalter S18 des Schaltnetzes auf den zweiten Anschlusspunkt IOX00 geführt ist. Der erste Anschlusspunkt IOX01 ist über einen fünfzehnten Schalter 17 des Schaltnetzes mit dem invertierenden Eingang des Ausgangsverstärkers 15 verbunden.

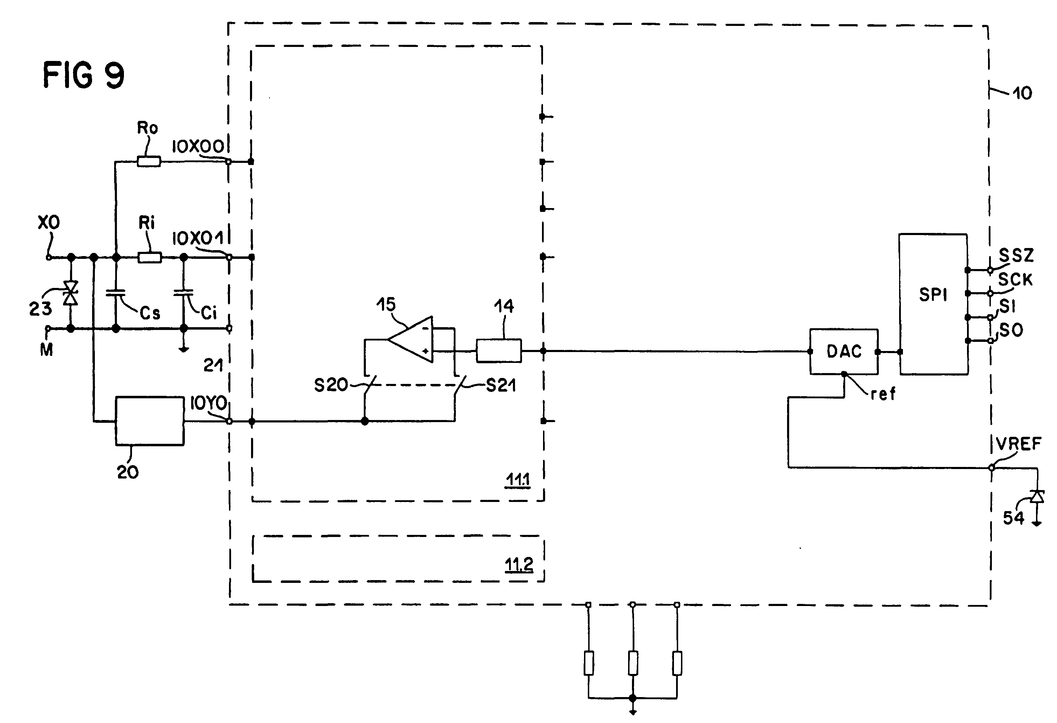

Das in der Fig. 9 zwischen der ersten Klemme X0 und der weiteren Klemme M angeschlossene Feldgerät ist ein stromgesteuertes Stellglied, welches beispielhaft in einem Bereich von 4 mA bis 20 mA anzusteuern ist. Der Digital-Analog-Wandler DAC ist ausgangsseitig mit dem Sample-And-Hold-Glied 14 verbunden. Das Sample-And-Hold-Glied 14 ist auf den nicht invertierenden Eingang des durch den Operationsverstärker implementierten Ausgangsverstärker 15 geführt, der ausgangsseitig über einen sechzehnten Schalter S20 des Schaltnetzes auf den dritten Anschlusspunkt IOY0 geführt ist. Der dritte Anschlusspunkt IOY0 ist über einen siebzehnten Schalter 21 des Schaltnetzes mit dem invertierenden Eingang des Ausgangsverstärkers 15 verbunden. Damit wird der Spannungs-Strom-Konverter 20 bei geschlossenen sechzehnten und siebzehnten Schaltern S20 und S21 über den als Spannungsfolger geschalteten Operationsverstärker angesteuert. Dadurch, dass der Spannungs-Strom-Konverter 20 ausserhalb des Schnittstellenbausteins 10 angeordnet ist, kann die Erwärmung des Schnittstellenbausteins 10 minimal gehalten werden, obwohl dennoch an der ersten Klemme X0 relativ grosse Ausgangsströme generierbar sind.

Vorteilhafterweise weist der Kanal 11.1 auch zwei in Reihe geschaltete Schalter T2 und T3 auf, wobei ein achtzehnter Schalter T2 einseitig an einer Speisespannung und ein neunzehnter Schalter T3 einseitig am Signalbezugspunkt liegt. Der dritte Anschlusspunkt IOY0 ist mit dem gemeinsamen Potential der beiden Schalter T2 und T3 und mit dem Eingang des ersten Komparators 16 verbunden (Fig. 2), der ausgangsseitig typischerweise auf das Serial-Peripheral-Interface SPI geführt ist.

In einer vorteilhaften Variante des Ein-/Ausgabemoduls 1 oder 2, in welcher der Spannungs-Strom-Konverter 20 nicht am dritten Anschlusspunkt IOYO angeschlossen ist, kann der dritte Anschlusspunkt IOY0 durch geeignetes Ansteuern der beiden Schalter T2 und T3 als Digital-Ausgang genutzt werden, durch den beispielsweise ein Relais ansteuerbar ist. Ausserdem ist der dritte Anschlusspunkt IOY0 - wenn die beiden Schalter T2 und T3 hochohmig gehaltenen werden - als Digital-Eingang nutzbar, dessen Signal vom ersten Komparator 16 an das Serial-Peripheral-Interface SPI weitergeleitet wird.

Die Werte der in den Ein-/Ausgabemodulen ausserhalb des Schnittstellenbausteins 10 angeordnete Bauelemente sind aufeinander abzustimmen, damit insbesondere der erste ohmsche Widerstand Ri und der zweite ohmsche Widerstand Ro Schutzfunktionen für den Schnittstellenbaustein 10 übernehmen können, ohne die erforderliche Genauigkeit der Signalerfassung und Signalgenerierung durch den Schnittstellenbaustein zu beeinträchtigen.

Bei den folgenden konkreten Zahlenwerten wird angenommen, dass der höchste Spannungswert, mit dem bei einer allfälligen Fehlverdrahtung zu rechnen ist und gegen die der Schnittstellenbaustein 10 zu schützen ist, 24 V + 20 % Wechselspannung beträgt. Im weiteren sollen die ausserhalb des Schnittstellenbausteins 10 angeordneten Bauelemente in der sogenannten SMD (Surface Mounted Device) - Technologie angeordnet und der Schnittstellenbaustein 10 in einem gewöhnlichen Kunststoffgehäuse untergebracht werden.

Der zweite ohmsche Widerstand Ro darf nicht kleiner sein als etwa 390 Ohm, da andernfalls in einem Falschverdrahtungsfall mit 24 V Wechselspannung der Schnittstellenbaustein 10 und der zweite Widerstand Ro zerstört werden könnten.

Sofern die vollständige Konfigurierbarkeit des Schnittstellenbausteins 10 genutzt werden soll, darf der zweite ohmsche Widerstand Ro auch nicht grösser sein als 390 Ohm. Diese Grenze ergibt sich durch eine maximal erlaubte Last von etwa 500 Ohm für einem Stromeingang, wenn der Messwiderstand 51, über dem der Analog-Digital-Wandler ADC die Spannung erfasst, 47 Ohm beträgt. In der Konfiguration als Stromeingang fliesst ein Strom durch den zweiten ohmschen Widerstand Ro, via den elften Schalter S9 und durch den Messwiderstand 51.

Sofern auf die Konfigurierbarkeit der ersten Klemme X0 als Stromeingang verzichtet wird, kann der zweite ohmsche Widerstand Ro auch grösser gewählt werden. Der Maximalwert liegt dann bei etwa 1500 Ohm. Begrenzend wirken sich Bedingungen aus, die dann gegeben sind, wenn die erste Klemme X0 als Spannungsausgang konfiguriert wird. Bei maximaler Last, darf der Spannungsabfall über den zweiten ohmschen Widerstand Ro nur so gross sein, dass der volle Bereich - beispielhaft 0 bis 10 V aussteuerbar ist. Im weiteren muss die Stabilität bei maximaler kapazitiver Last, typischerweise bei 230 nF, gewährleistet sein. Ein zu grosser zweiter Widerstand Ro würde das Stabilitätsverhalten verschlechtern.

Der erste ohmsche Widerstand Ri sollte möglichst gross sein, damit bei einer Falschverdrahtung nur ein kleiner Strom fliesst. Jedoch dürfen im ersten Anschlusspunkt IOX01 fliessende Eingangsleckströme über dem ersten ohmschen Widerstand Ri keinen nennenswerten Spannungsabfall erzeugen.

Der Halbleiter-Überspannungsschutz 23, der Kondensator Cs und der weitere Kondensator Ci sind einsetzbar, um die konfigurierbare erste Klemme X0 elektromagnetisch verträglich zu gestalten. Die Schwellspannung des Halbleiter-Überspannungsschutzes 23 muss entsprechend dem Spitzenwert einer falsch verdrahteten, 24V Wechselspannung führenden Leitung - bei Berücksichtigung von 20% Überspannung - mindestens 42 V betragen.

Die Kapazität des Kondensators Cs darf die maximal zulässige kapazitive Last für einen aktiven Sensor mit Spannungsausgang nicht überschreiten. Die maximal zulässige kapazitive Last beträgt typischerweise 20 nF.

Die vom ersten ohmschen Widerstand Ri und dem weiteren Kondensator Ci gebildete Zeitkonstante Ri * Ci beeinflusst die Stabilität der als Spannungsausgang konfigurierten ersten Klemme X0. Die Werte des ersten ohmschen Widerstands Ri und des weiteren Kondensators Ci sind so zu wählen, dass die Zeitkonstante Ri * Ci den Wert von 1 µs nicht überschreitet, da der Spannungsausgang sonst instabil wird.

## Patentansprüche

1. Anordnung mit einem Schnittstellenbaustein (10) und mit Anschlussstellen für Feldgeräte (7),
wobei der Schnittstellenbaustein (10) einen Analog-Digital-Wandler (ADC), einen Digital-Analog-Wandler (DAC), eine Stromquelle (25) und ein Schaltnetz aufweist, durch welches je nach Bedarf der Analog-Digital-Wandler (ADC), der Digital-Analog-Wandler (DAC) oder die Stromquelle (25) selbsttätig mit Anschlusspunkten des Schnittstellenbausteins (10) verbindbar sind,
wobei der Schnittstellenbaustein (10) über einen Mikrocomputer (8) an einen digitalen Datenbus (3) eines Steuer- und/oder Regelgeräts (4) anschliessbar ist und
wobei eine Anschlussstelle (X0, M) für ein Feldgerät (7) eine über den Schnittstellenbaustein (10) für das Feldgerät (7) als Eingang und/oder als Ausgang konfigurierbare Klemme (X0) für bidirektionale Signale aufweist,
**dadurch gekennzeichnet,**
**dass** die Klemme (X0) über einen ersten ohmschen Widerstand (Ri) mit einem ersten Anschlusspunkt (IOX01) des Schnittstellenbausteins (10) verbunden ist und dass die Klemme (X0) über einen zweiten ohmschen Widerstand (Ro) mit einen zweiten Anschlusspunkt (IOX00) des Schnittstellenbaussteins (10) verbunden ist,
wobei der erste Anschlusspunkt (IOX01) über das Schaltnetz mit dem Eingang des Analog-Digital-Wandlers (ADC) verbindbar ist und der zweite Anschlusspunkt (IOX00) über das Schaltnetz mit der Stromquelle (25) verbindbar ist, und wobei die beiden ohmschen Widerstände (Ro, Ri) nicht im Schnittstellenbaustein implementiert sind.

2. Anordnung nach Anspruch 1, **gekennzeichnet durch** eine weitere Klemme (M), die mit dem Signalbezugspunkt des Schnittstellenbausteins (10) verbunden ist.

3. Anordnung nach Anspruch 2, **gekennzeichnet durch** einen zwischen die beiden Klemmen (X0, M) geschalteten und nicht im Schnittstellenbaustein (10) implementierter Halbleiter-Überspannungsschutz.

4. Anordnung nach einem der Ansprüche 2 oder 3, **gekennzeichnet durch** einen zwischen die beiden Klemmen (X0, M) geschalteten nicht im Schnittstellenbaustein (10) implementierter Kondensator (Cs).

5. Anordnung nach einem der Ansprüche 2 bis 4, **gekennzeichnet durch** einen zwischen den ersten Anschlusspunkt (IOX01) und den Signalbezugspunkt (M) geschalteten nicht im Schnittstellenbaustein (10) implementierter Kondensator (Ci).

6. Anordnung nach einem vorangehenden Anspruch, **gekennzeichnet durch** eine Skaliereinrichtung (22), welche eingangsseitig vor den Analog-Digital-Wandler (ADC) geschaltet ist, und **durch** den auf den Analog-Digital-Wandler (ADC) zuführbare Signale skalierbar sind.

7. Anordnung nach einem vorangehenden Anspruch, **gekennzeichnet durch** einen Schalter (S11) des Schaltnetzes, **durch** den die Stromquelle (25) an einen über einen Anschlusspunkt (RCAL1) des Schnittstellenbausteins (10) geführten Kalibrierwiderstand (52) anschliessbar ist, wobei der Kalibrierwiderstand (52) nicht im Schnittstellenbaustein (10) implementiert ist und die über dem Kalibrierwiderstand (52) liegende Spannung über einen weiteren Schalter (S3) des Schaltnetzes auf den Analog-Digital-Wandler (ADC) leitbar ist.

8. Anordnung nach einem vorangehenden Anspruch, **gekennzeichnet durch** einen Schalter (S10) des Schaltnetzes, **durch** den die Stromquelle (25) derart an einen über einen Anschlusspunkt (RCAL2) des Schnittstellenbausteins (10) geführten Kalibrierwiderstand (53) anschliessbar ist, dass der Kalibrierwiderstand (53) und auch der zweite Anschlusspunkt (IOX00) **durch** die Stromquelle (25) gespeist werden, wobei die über dem Kalibrierwiderstand (53) liegende Spannung über einen weiteren Schalter (4) des Schaltnetzes auf den Analog-Digital-Wandler (ADC) geführt ist.

9. Anordnung nach einem vorangehenden Anspruch, **gekennzeichnet durch** ein Spannungs-Referenzelement (54) das über einen Schalter (S1) des Schaltnetzes auf den Analog-Digital-Wandler (ADC) leitbar ist.

10. Anordnung nach einem vorangehenden Anspruch, **gekennzeichnet durch** ein eingangsseitig mit dem Ausgang des Digital-Analog-Wandlers (DAC) verbundenes Sample-And-Hold-Glied (14) und einen als Operationsverstärker implementierten Ausgangsverstärker (15), wobei das Sample-And-Hold-Glied (14) ausgangsseitig auf den nicht invertierenden Eingang des Ausgangsverstärkers (15) geführt ist, wobei der invertierende Eingang des Ausgangsverstärkers (15) über einen Schalter (S17) mit dem ersten Anschlusspunkt (IOX01) verbindbar ist und wobei der Ausgang des Ausgangsverstärkers (15) über einen weiteren Schalter (S18) des Schaltnetzes mit dem zweiten Anschlusspunkt (IOX00) verbindbar ist.

11. Anordnung nach einem vorangehenden Anspruch, **gekennzeichnet durch** einen eingangsseitig an einen dritten Anschlusspunkt (IOY0) des Schnittstellenbausteins (10) und ausgangsseitig an die erste Klemme (X0) angeschlossenen Spannungs-Strom-Konverter (20) und **durch** ein eingangsseitig mit dem Ausgang des Digital-Analog-Wandlers (DAC) verbundenes Sample-And-Hold-Glied (14) sowie einen als Operationsverstärker implementierten Ausgangsverstärker (15), wobei das Sample-And-Hold-Glied (14) ausgangsseitig auf den nicht invertierenden Eingang des Ausgangsverstärkers (15) geführt ist, wobei der invertierende Eingang des Ausgangsverstärkers (15) über einen Schalter (S21) und der Ausgang des Ausgangsverstärkers (15) über einen weiteren Schalter (S20) des Schaltnetzes mit dem dritten Anschlusspunkt (IOY0) verbindbar sind.

12. Einrichtung nach einem vorangehenden Anspruch, **gekennzeichnet durch** zwei in Reihe geschaltete Schalter (T2 , T3), wobei ein erster Schalter (T2) einseitig an einer Speisespannung und der zweite Schalter einseitig an einem Signalbezugspunkt (M) liegt und das gemeinsame Potential der beiden Schalter (T2, T3) mit einem dritten Anschlusspunkt (IOY0) des Schnittstellenbausteins verbunden ist, so dass der dritte Anschlusspunkt (IOY0) **durch** Ansteuern der beiden Schalter (T2, T3) als Digital-Ausgang einsetzbar ist.

13. Einrichtung nach einem vorangehenden Anspruch, **gekennzeichnet durch** einen eingangsseitig mit einem dritten Anschlusspunkt (IOY0) des Schnittstellenbausteins (10) verbundenen Komparator (16), so dass der dritte Anschlusspunkt (IOY0) als Digital-Eingang einsetzbar ist.

14. Einrichtung nach einem vorangehenden Anspruch, **dadurch gekennzeichnet, dass** der zweite ohmsche Widerstand (Ro) einen Nennwert im Bereich von 390 Ohm bis 1500 Ohm aufweist.

15. Einrichtung nach einem vorangehenden Anspruch, **dadurch gekennzeichnet, dass** der erste ohmsche Widerstand (Ri) einen Nennwert im Bereich von 10 kOhm bis 100 kOhm aufweist.

16. Einrichtung nach Anspruch 14, **dadurch gekennzeichnet, dass** der zweite ohmsche Widerstand (Ro) einen Nennwert von 390 Ohm aufweist.

17. Einrichtung nach einem der vorangehenden Ansprüche 5 bis 16, **dadurch gekennzeichnet, dass** die von dem zwischen den ersten Anschlusspunkt (IOX01) und den Signalbezugspunkt (M) geschalteten Kondensator (Ci) und dem ersten ohmschen Widerstand (Ri) gebildete Zeitkonstante höchstens eine Mikrosekunde beträgt.

## Claims

1. Apparatus having an interface module (10) and having connection points for field devices (7),
the interface module (10) having an analogue-digital converter (ADC), a digital-analogue converter (DAC), a current source (25) and a switching network, by means of which, as required, the analogue-digital converter (ADC), the digital-analogue converter (DAC) or the current source (25) can be connected automatically to connection points of the interface module,
it being possible for the interface module (10) to be connected via a microcomputer (8) to a digital data bus (3) of a control and/or regulating device (4) and
a connection point (X0, M) for a field device (7) having a terminal (X0) that can be configured via the interface module (10) as an input and/or as an output for bidirectional signals,
**characterized in that**
the terminal (X0) is connected via a first nonreactive resistor (Ri) to a first connection point (IOX01) of the interface module (10), and **in that** the terminal (X0) is connected via a second nonreactive resistor (Ro) to a second connection point (IOX00) of the interface module (10),
it being possible for the first connection point (IOX01) to be connected via the switching network to the input of the analogue-digital converter (ADC) and for the second connection point (IOX00) to be connected via the switching network to the current source (25), and the two nonreactive resistors (Ro, Ri) not being implemented in the interface module.

2. Apparatus according to Claim 1, **characterized by** a further terminal (M), which is connected to the signal reference point of the interface module (10).

3. Apparatus according to Claim 2, **characterized by** a semiconductor overvoltage protector, which is connected between the two terminals (X0, M) and is not implemented in the interface module (10).

4. Apparatus according to either of Claims 2 and 3, **characterized by** a capacitor (Cs) which is connected between the two terminals (X0, M) but not implemented in the interface module (10).

5. Apparatus according to one of Claims 2 to 4, **characterized by** a capacitor (Ci) which is connected between the first connection point (IOX01) and the signal reference point (M) but not implemented in the interface module (10).

6. Apparatus according to a preceding claim, **characterized by** a scaling device (22) which, on the input side, is connected upstream of the analogue-digital converter (ADC) and by means of which signals that can be fed to the analogue-digital converter (ADC) can be scaled.

7. Apparatus according to a preceding claim, **characterized by** a switch (S11) of the switching network, by means of which the current source (25) can be connected to make a calibration resistor (52) led via a connection point (RCAL1) of the interface module (10), the calibration resistor (52) not being implemented in the interface module (10) and it being possible for the voltage across the calibration resistor (52) to be fed via a further switch (S3) of the switching network to the analogue-digital converter (ADC).

8. Apparatus according to a preceding claim, **characterized by** a switch (S10) of the switching network, by means of which the current source (25) can be connected to a calibration resistor (53) led via a connection point (RCAL2) of the interface module (10) in such a way that the calibration resistor (53) and the second connection point (IOX00) are fed by the current source (25), the voltage across the calibration resistor (53) being led via a further switch (4) of the switching network to the analogue-digital converter (ADC).

9. Apparatus according to a preceding claim, **characterized by** a voltage reference element (54) which can be led via a switch (S1) of the switching network to the analogue-digital converter (ADC).

10. Apparatus according to a preceding claim, **characterized by** a sample and hold element (14) connected on the input side to the output of the digital-analogue converter (DAC) and an output amplifier (15) implemented as an operational amplifier, the sample and hold element (14) being led on the output side to the non-inverting input of the output amplifier (15), it being possible for the inverting input of the output amplifier (15) to be connected via a switch (S17) to the first connection point (IOX01), and it being possible for the output of the output amplifier (15) to be connected via a further switch (S18) of the switching network to the second connection point (IOX00).

11. Apparatus according to a preceding claim, **characterized by** a voltage-current converter (20) connected on the input side to a third connection point (IOY0) of the interface module (10) and on the output side to the first terminal (X0), and by a sample and hold element (14) connected on the input side to the output of the digital-analogue converter (DAC), and also an output amplifier (15) implemented as an operational amplifier, the sample and hold element (14) being led on the output side to the non-inverting input of the output amplifier (15), it being possible for the inverting input of the output amplifier (15) to be connected via a switch (S21), and for the output of the output amplifier (15) to be connected via a further switch (S20) of the switching network to the third connection point (IOY0).

12. Equipment according to the preceding claim, **characterized by** two switches (T2, T3) connected in series, a first switch (T2) being connected on the input side to a feed voltage and the second switch being connected on the input side to a signal reference point (M), and the common potential of the two switches (T2, T3) being connected to a third connection point (IOY0) of the interface module, so that the third connection point (IOY0) can be used as a digital output by driving the two switches (T2, T3).

13. Equipment according to a preceding claim, **characterized by** a comparator (16) which is connected on the input side to a third connection point (IOY0) of the interface module (10), so that the third connection point (IOY0) can be used as a digital input.

14. Equipment according to a preceding claim, **characterized in that** the second nonreactive resistor (Ro) has a nominal value in the range from 390 ohm to 1500 ohm.

15. Equipment according to a preceding claim, **characterized in that** the first nonreactive resistor (Ri) has a nominal value in the range from 10 kohm to 100 kohm.

16. Equipment according to claim 14, **characterized in that** the second nonreactive resistor (Ro) has a nominal value of 390 ohm.

17. Equipment according to one of the preceding Claims 5 to 16, **characterized in that** the time constant formed by the capacitor (Ci) connected between the first connection point (IOX01) and the signal reference point (M) and the first nonreactive resistor (Ri) is at most one microsecond.

## Revendications

1. Ensemble comprenant un composant d'interface (10) et des points de raccordement pour des appareils de terrain (7),
le composant d'interface (10) comportant un convertisseur analogique numérique (ADC), un convertisseur numérique analogique (DAC), une source de courant (25) et un réseau de commutation par lequel, suivant les besoins, le convertisseur analogique numérique (ADC), le convertisseur numérique analogique (DAC) ou la source de courant (25) peuvent être reliés automatiquement à des points de raccordement du composant d'interface (10),
le composant d'interface (10) étant raccordable à un bus de données numérique (3) d'un appareil de contrôle et/ou de réglage (4) par l'intermédiaire d'un micro-ordinateur (8) et
un point de raccordement (X0, M) pour un appareil de terrain (7) comportant, pour des signaux bidirectionnels, une borne (X0) configurable en tant qu'entrée et/ou en tant que sortie pour l'appareil de terrain (7) par l'intermédiaire du composant d'interface (10),
**caractérisé en ce que**
la borne (X0) est reliée à un premier point de raccordement (IOX01) du composant d'interface (10) par l'intermédiaire d'une première résistance ohmique (Ri) et **en ce que** la borne (X0) est reliée à un deuxième point de raccordement (IOX00) du composant d'interface (10) par l'intermédiaire d'une deuxième résistance ohmique (Ro),
le premier point de raccordement (IOX01) pouvant être relié à l'entrée du convertisseur analogique numérique (ADC) par l'intermédiaire du réseau de commutation et le deuxième point de raccordement (IOX00) pouvant être relié à la source de courant (25) par l'intermédiaire du réseau de commutation, et
les deux résistances ohmiques (Ro, Ri) n'étant pas implémentées dans le composant d'interface.

2. Ensemble selon la revendication 1, **caractérisé par** une autre borne (M) qui est reliée au point de référence des signaux du composant d'interface (10).

3. Ensemble selon la revendication 2, **caractérisé par** une protection à semi-conducteur contre la surtension, montée entre les deux bornes (X0, M) et non implémentée dans le composant d'interface (10).

4. Ensemble selon l'une des revendications 2 ou 3, **caractérisé par** un condensateur (Cs) monté entre les deux bornes (X0, M), non implémenté dans le composant d'interface (10).

5. Ensemble selon l'une des revendications 2 à 4, **caractérisé par** un condensateur (Ci) monté entre le premier point de raccordement (IOX01) et le point de référence des signaux (M), non implémenté dans le composant d'interface (10).

6. Ensemble selon une revendication précédente, **caractérisé par** un dispositif de mise à l'échelle (22) qui est monté côté entrée en amont du convertisseur analogique numérique (ADC) et par lequel des signaux pouvant être conduits au convertisseur analogique numérique (ADC) peuvent être mis à l'échelle.

7. Ensemble selon une revendication précédente, **caractérisé par** un commutateur (S11) du réseau de commutation par lequel la source de courant (25) est raccordable à une résistance de calibrage (52) conduite en passant par un point de raccordement (RCAL1) du composant d'interface (10), la résistance de calibrage (52) n'étant pas implémentée dans le composant d'interface (10) et la tension située au-dessus de la résistance de calibrage (52) pouvant être conduite au convertisseur analogique numérique (ADC) par l'intermédiaire d'un autre commutateur (S3) du réseau de commutation.

8. Ensemble selon une revendication précédente, **caractérisé par** un commutateur (S10) du réseau de commutation par lequel la source de courant (25) est raccordable de manière telle à une résistance de calibrage (53) conduite en passant par un point de raccordement (RCAL2) du composant d'interface (10) que la résistance de calibrage (53) ainsi que le deuxième point de raccordement (IOX00) sont alimentés par la source de courant (25), la tension située au-dessus de la résistance de calibrage (53) étant conduite au convertisseur analogique numérique (ADC) par l'intermédiaire d'un autre commutateur (4) du réseau de commutation.

9. Ensemble selon une revendication précédente, **caractérisé par** un élément de référence de tension (54) qui peut être conduit au convertisseur analogique numérique (ADC) par l'intermédiaire d'un commutateur (S1) du réseau de commutation.

10. Ensemble selon une revendication précédente, **caractérisé par** un organe «Sample And Hold» (14) relié côté entrée à la sortie du convertisseur numérique analogique (DAC) et par un amplificateur de sortie (15) implémenté en tant qu'amplificateur d'opération, l'organe «Sample And Hold» (14) étant conduit, côté sortie, à l'entrée non inversante de l'amplificateur de sortie (15), l'entrée inversante de l'amplificateur de sortie (15) pouvant être reliée au premier point de raccordement (IOX01) par l'intermédiaire d'un commutateur (S17) et la sortie de l'amplificateur de sortie (15) pouvant être reliée au deuxième point de raccordement (IOX00) par l'intermédiaire d'un autre commutateur (S18) du réseau de commutation.

11. Ensemble selon une revendication précédente, **caractérisé par** un convertisseur tension courant (20) raccordé côté entrée à un troisième point de raccordement (IOY0) du composant d'interface (10) et, côté sortie, à la première borne (X0) et par un organe «Sample And Hold» (14) relié côté entrée à la sortie du convertisseur numérique analogique (DAC) ainsi que par un amplificateur de sortie (15) implémenté en tant qu'amplificateur d'opération, l'organe «Sample And Hold» (14) étant conduit, côté sortie, à l'entrée non inversante de l'amplificateur de sortie (15), l'entrée inversante de l'amplificateur de sortie (15) pouvant être reliée au troisième point de raccordement (IOY0) par l'intermédiaire d'un commutateur (S21) et la sortie de l'amplificateur de sortie (15), par l'intermédiaire d'un autre commutateur (S20) du réseau de commutation.

12. Dispositif selon une revendication précédente, **caractérisé par** deux commutateurs (T2, T3) montés en série, un premier commutateur (T2) étant situé unilatéralement à une tension d'alimentation et le deuxième commutateur étant situé unilatéralement à un point de référence des signaux (M) et le potentiel commun des deux commutateurs (T2, T3) étant relié à un troisième point de raccordement (IOY0) du composant d'interface de sorte que le troisième point de raccordement (IOY0) peut être mis en oeuvre en tant que sortie numérique par commande des deux commutateurs (T2, T3).

13. Dispositif selon une revendication précédente, **caractérisé par** un comparateur (16) relié côté entrée à un troisième point de raccordement (IOY0) du composant d'interface (10) de sorte que le troisième point de raccordement (IOY0) peut être mis en oeuvre en tant qu'entrée numérique.

14. Dispositif selon une revendication précédente, **caractérisé en ce que** la deuxième résistance ohmique (Ro) présente une valeur nominale comprise dans la plage allant de 390 ohms à 1500 ohms.

15. Dispositif selon une revendication précédente, **caractérisé en ce que** la première résistance ohmique (Ri) présente une valeur nominale comprise dans la plage allant de 10 kohms à 100 kohms.

16. Dispositif selon la revendication 14, **caractérisé en ce que** la deuxième résistance ohmique (Ro) présente une valeur nominale de 390 ohms.

17. Dispositif selon l'une des revendications précédentes 5 à 16, **caractérisé en ce que** la constante de temps formée par le condensateur (Ci) monté entre le premier point de raccordement (IOX01) et le point de référence des signaux (M) et par la première résistance ohmique (Ri) est d'une microseconde au maximum.
